# EUROPEAN PATENT SPECIFICATION

(11) **EP 2 882 569 B1**
(45) Date of publication and mention of the grant of the patent: **27.07.2016**
(21) Application number: 13723966.1
(22) Date of filing: 29.03.2013
(51) Int. Cl.: B23Q 11/08

(54) **TELESCOPIC PROTECTIVE COVER**
TELESKOPISCHE SCHUTZABDECKUNG
CAPOT DE PROTECTION TÉLESCOPIQUE

(30) Priority: 31.07.2012 IT BO20120416
(43) Date of publication of application: 17.06.2015
(73) Proprietor: P.E.I. Protezioni Elaborazioni Industriali S.r.l., 40012 Calderara di Reno (Bologna) (IT)
(72) Inventor: MARDEGAN, Vittorio, I-26037 San Giovanni In Croce (IT); BISSOLO, Fulvio, I-39055 Laives (IT)
(74) Representative: Milli, Simone
(86) International application number: PCT/IB2013/052535
(87) International publication number: WO 2014/020453

(56) References cited:
- WO-A1-90/07400
- DE-A1- 10 123 580
- GB-A- 757 555
- US-A- 3 366 012

## Description

### Technical field

This invention relates to a telescopic protective cover comprising a plurality of box-shaped members which are slidable inside one another in a substantially sealed manner.

### Background art

Covers of this kind are used, in industrial contexts, both for accident prevention and as protection against dirt, swarf, dust, coolants or lubricants for the slideways of movable working parts of machine tools, automatic machines or robotized equipment systems.

More specifically, the box-shaped member at one end of the telescopic cover is mounted at a fixed position, whereas the box-shaped member at the opposite end of the telescopic cover is solidly connected to the movable working part of the machine or system whose slideways are to be protected.

Generally speaking, telescopic covers are provided in pairs associated with each of the two sides of the feed stroke of the working part, in such a way that as the working part moves to and fro along the slideways, one telescopic cover is extended while the other telescopic cover is accordingly retracted, and vice versa.

According to a first prior art technique, movement of the working part along the slideways causes the box-shaped members to abut each other in cascade, extending or retracting each telescopic cover according to the direction in which adjacent box-shaped members are driven in abutment.

Telescopic covers of this kind are usually provided with damping elements, interposed between contiguous box-shaped members, because during operation at high speeds, the movement of the box-shaped members into abutment against each other causes a succession of impacts of considerable intensity.

Although they reduce acceleration and deceleration of the box-shaped members, however, the damping elements are not able to provide them with the smooth movement that is, instead, desirable.

To overcome this problem, according to a different prior art technique, pantograph type actuating devices have been made which open and close all the box-shaped members simultaneously, that is to say, in substantial synchrony with each other.

According to this technique, all the box-shaped members are constrained to a pantograph whose two opposite ends are connected to the respective opposite ends of the telescopic cover. That way, extending and retracting the telescopic cover is controlled by the accordion-like movement of the pantograph which guarantees the uninterrupted, smooth movement of all the box-shaped members.

An example of a pantograph capable of simultaneously moving all the box-shaped members of a telescopic cover is provided by patent GB 757555.

The pantograph described in patent GB 757555 is in the form of lazytongs-like guide means with a plurality of central pins, each fixed to a respective wall of a box-shaped member of the telescopic cover. Each central pin is hinged to two rods whose longitudinal ends are hinged to the longitudinal ends of the adjacent rods by means of peripheral pins.

In this configuration, all the pins are subject to heavy wear and are highly stressed. To this must be added the fact that the peripheral pins are suspended, that is to say, not supported by the telescopic cover and this, following pin wear and the resulting slack, causes displacements which eventually lead to jamming and failure of the pantograph.

The latter drawback is partly overcome in the pantograph described in patent DE 957710.

The pantograph described in patent DE 957710 has a plurality of central pins, each of which is suspended between two adjacent box-shaped members of the telescopic cover. Each central pin is hinged to two rods whose longitudinal ends are hinged to the longitudinal ends of the adjacent rods by means of peripheral pins.

For each pair of peripheral pins which are aligned in the direction transversal to the direction of movement of the telescopic cover, one of the two pins is fixed to a respective wall of a box-shaped member, whilst the other is slidably coupled to a rail mounted along the selfsame wall of the box-shaped member.

Compared to the pantograph described in patent GB 757555, the one described in patent DE 957710 is more stable because it has a higher number of pins supported by the telescopic cover and, moreover, the higher number of push/pull pins (in this case the peripheral pins) allows, on the one hand, better balancing of the action on the box-shaped members and, on the other hand, reducing the stress on the pins.

Even in the pantograph described in patent DE 957710, however, the rods undergo a large angular movement between the fully extended and fully retracted positions of the telescopic cover, thereby causing heavy wear and high stress on the pins, especially at the fully extended position of the telescopic cover.

Other examples of pantographs capable of simultaneously moving all the box-shaped members of a telescopic cover are provided by patent EP 963809 A2, EP 1232833 A1, EP 1262277 A1 and US 2006/0102296. In these pantographs, too, however, the large angular movement of the rods between the fully extended and fully retracted positions of the telescopic cover leads to heavy wear and high stress on the pins.

### Disclosure of the invention

The aim of this invention is to provide a telescopic protective cover whose box-shaped members are moved by a unit which is reliable, robust and, at the same time, compact, that is to say, occupies a reduced space in the fully retracted position of the telescopic cover.

The invention accordingly provides a telescopic protective cover as described in the appended claims.

### Brief description of drawings

The advantages of the invention are more apparent from the detailed description which follows, with reference to the accompanying drawings which illustrate preferred non-limiting example embodiments of the invention. In these drawings:
- Figure 1 is a schematic, perspective upside-down view of a telescopic protective cover according to this invention in a fully extended position;

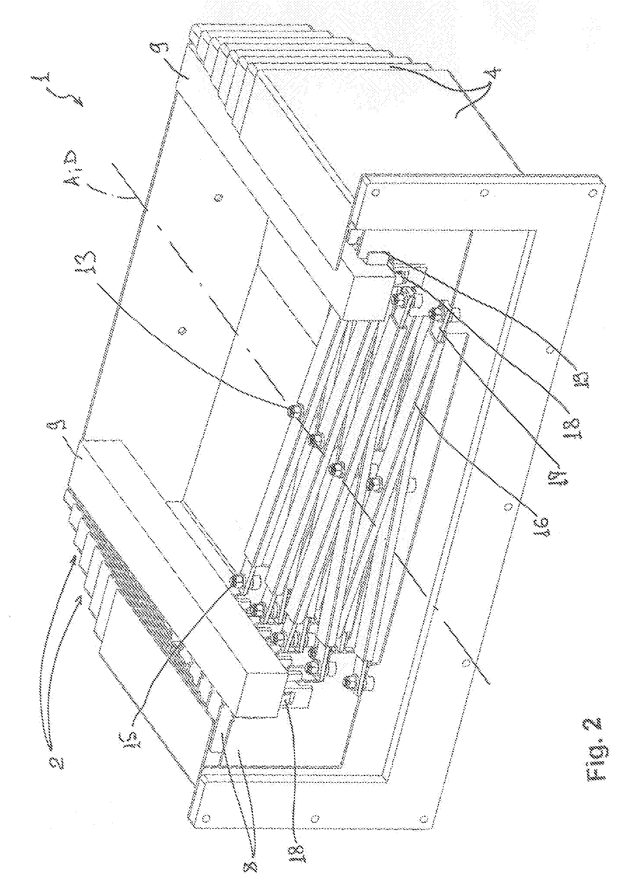

- Figure 2 shows the cover of Figure 1 in a fully retracted position; and

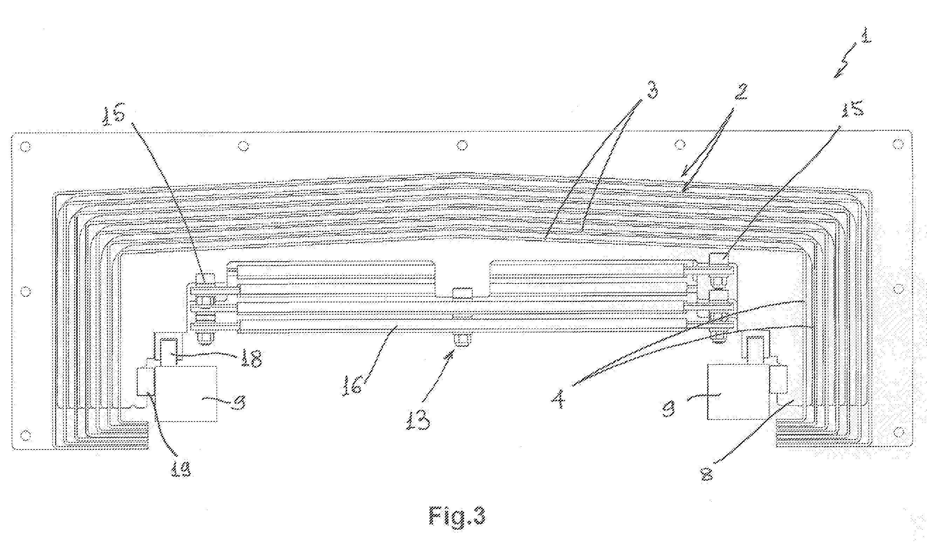

- Figures 3 and 4 are, respectively, a transversal cross section and a longitudinal cross section of the cover of Figure 1.

### Detailed description of the preferred embodiments of the invention

The numeral 1 in the drawings denotes in its entirety a telescopic protective cover designed to protect the slideways for movable working parts of machine tools, automatic machines or robotized equipment systems against dirt, swarf, dust, coolants or lubricants.

The cover 1 extends longitudinally along a respective central axis A and comprises a plurality of box-shaped members 2, or cases, which are made of sheet steel and which are slidable inside one another in a substantially sealed manner.

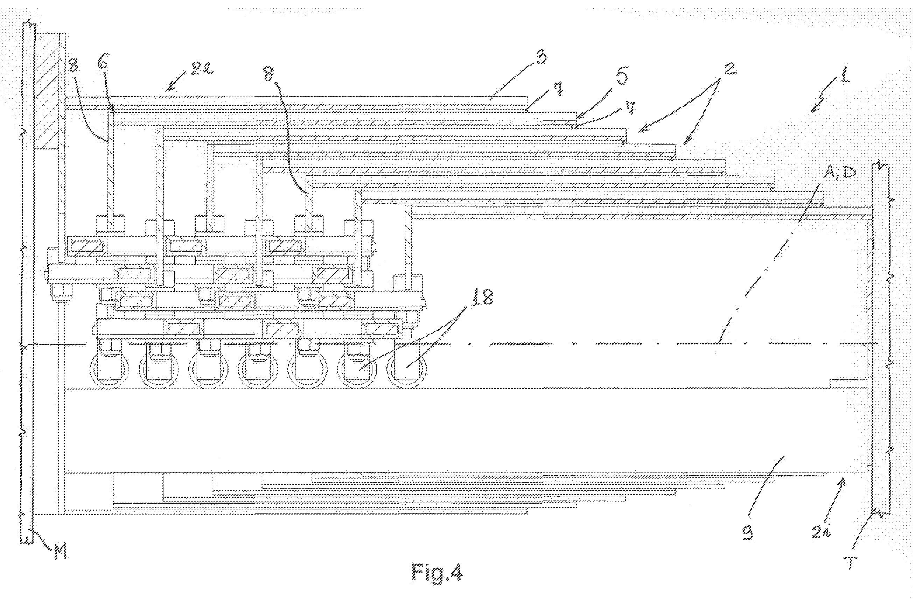

As illustrated in Figure 4, the innermost box-shaped member 2i is fixed to a frame T or to a fixed portion of the machine or piece of equipment whose slideways 9 are to be protected, whereas the outermost box-shaped member 2e is fixed to a respective end M of a movable part which the cover 1 is associated with.

Thus, all the box-shaped members 2 are movable except the innermost box-shaped member 2i.

The telescopic cover 1 is one of a pair of structurally identical, opposing telescopic covers 1, each of which is associated with one of the two opposite ends M of the working part. Thus, when the working part moves to and fro along the slideways 9, one telescopic cover 1 is extended while the other telescopic cover 1 is accordingly retracted, and vice versa.

In each telescopic cover 1, each of the box-shaped members 2 has a large protective wall 3 from which two side walls 4, or flanks, extend at right angles.

The wall 3 is delimited by the flanks 4 and, in addition to those, by a front edge 5 and a rear edge 6 which both extend transversely to a direction D of movement and mutual sliding of the box-shaped members 2.

The direction D is parallel to the aforementioned slideways 9 and to the aforementioned axis A.

On the opposite side of the wall 3, the flanks 4 are bent in the shape of an L in such a way that the box-shaped members 2 are transversely and telescopically contained inside each other, from the innermost one to the outermost one.

At the front edge 5 of each box-shaped member 2 there is a scraper 7 which extends for the full extent of the L-shaped flanks 4 and acts as a sealing member between contiguous box-shaped members 2.

At the rear edge 6, each box-shaped member 2 also has a rear wall 8 extending at a right angle between the flanks 4.

The box-shaped members 2 are equipped, in known manner not described herein, with bearing systems, such as rotary bearings, wheels, sliding blocks and the like mounted on the walls 8 and with further bearing systems, such as rotary bearings, wheels, sliding blocks and the like mounted on the flanks 4, to guarantee support and free movement of the box-shaped members 2 relative to each other and of the telescopic cover 1 in the slideways 9.

The box-shaped members 2 are equipped with rotary bearings 18 and sliding blocks 19 mounted on the walls 8 to guarantee support and free movement of the box-shaped members 2 relative to each other and of the telescopic cover 1 in the slideways 9.

Each box-shaped member 2 is connected to each box-shaped member 2 adjacent to it by at least one pantograph 10 or by a pair of pantographs 10 forming part of the cover 1.

The two pantographs 10 are mounted in two respective, different planes, or levels, that is to say, they extend entirely in respective planes which are parallel to each other. More specifically, the first pantograph 10i is positioned closer to the slideways 9 than the second pantograph 10s. The second pantograph 10s, on the other hand, is positioned closer to the walls 3 than the first pantograph 10i.

In one setup of the cover 1 where the slideways 9 are located below and the walls 3 above, the lower pantograph 10i is positioned entirely below the upper pantograph 10s.

Each pantograph 10, or articulated link connection, comprises a plurality of basic cross joints 11, or basic crosses 11, which are adjacent to each other and interconnected in succession in the direction D of movement of the telescopic cover 1.

Each cross joint 11 comprises two telescopic arms 12 hinged centrally to one another through the agency of a central pin 13.

Each arm 12 comprises a tubular element 16 inside which two rods 17 which telescopically protrude from the two longitudinal ends of the selfsame tubular element 16 are slidably coupled.

The tubular element 16 and the rods 17 have a flattened shape.

Obviously, the rods 17 may, for example, be hexagonal or elliptic, these being shapes which are totally equivalent or can be likened to a flat shape.

The tubular element 16 is provided, centrally between the rods 17, with a housing for accommodating the respective central pin 13.

Each telescopic arm 12 of the cross joint 11 has, on opposite sides of the central pin 13, two longitudinal ends 14 which are hinged to respective peripheral pins 15. More in detail, each of the rods 17 is provided, at the end of it 14 outside the tubular element 16, with a housing for accommodating the respective peripheral pin 15.

The peripheral pins 15 are aligned in pairs in a direction transversal to the direction D of movement of the telescopic cover 1 and both of the peripheral pins 15 in each pair of aligned peripheral pins 15 are fixed to a single box-shaped member 2. More specifically, both peripheral pins 15 are fixed to the same wall 8 of one box-shaped member 2 in the proximity of the respective flanks 4.

The cross joints 11 are interconnected in twos at a respective wall 8 by means of a common pair of aligned peripheral pins 15.

The central pin 13 of each cross joint 11 is fixed to a box-shaped member 2 which is interposed between the adjacent box-shaped members which the respective longitudinal ends 14 of the same cross joint 11 are hinged to in pairs.

More specifically, the central pin 13 of each cross joint 11 is fixed to a movement wall 8 of a box-shaped member 2 which is interposed between the adjacent box-shaped members which the respective longitudinal ends 14 of the same cross joint 11 are hinged to in pairs.

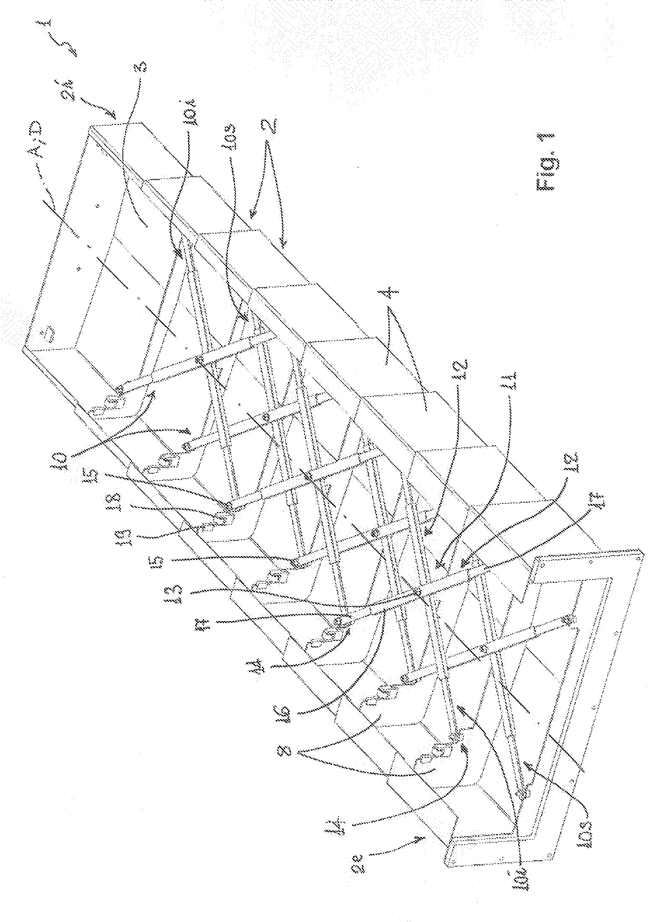

The central pins 13 are aligned in a row extending parallel to the direction D of movement of the telescopic cover 1. More specifically, each central pin 13 is fixed to a central portion of the respective wall 8. More in detail, with reference to Figure 1, the central pins 13 are present in all the intermediate box-shaped members 2.

The peripheral pins 15 are aligned in two rows extending parallel to the direction D of movement of the cover 1 and at an equal distance from the row of central pins 13. More in detail, with reference to Figure 1, the peripheral pins 15 are present in all the box-shaped members 2.

Each of the two pantographs 10 is constrained to a group of box-shaped members 2 arranged in succession. More precisely, the pantograph 10s is constrained to the outermost box-shaped member 2e and to all the intermediate box-shaped members 2, whilst the pantograph 10i is constrained to the innermost box-shaped member 2i and to all the intermediate box-shaped members 2.

Thus, each intermediate box-shaped member 2 is connected to both of the pantographs 10 which are synchronized with each other in their extending and retracting movements.

In other words, the two pantographs 10 (10i and 10s), or articulated link connections, lie in two planes and are offset from each other in the direction D of movement of the telescopic cover 1, that is, along the aforementioned axis A.

Along the direction D, that is, along the axis A, the peripheral pins 15 of one pantograph 10 are alternated, in their succession, with the peripheral pins 15 of the other pantograph 10.

According to the invention, the maximum opening angle of the cross joints is kept smaller than that of prior art telescopic covers whose box-shaped members have the same stroke as those of this invention. Further, the fixed position of the peripheral pins, which guarantees a constant and relatively large spacing between the peripheral pins themselves, allows balanced movement, without swinging and/or bending of the box-shaped members. All of this advantageously guarantees, on the one hand, reduced stress on the pins and, on the other, reduced wear on the pins and rods thanks to their reduced relative rotation.

Distortions of motion, if any, are automatically compensated by the variable length of the telescopic arms.

Furthermore, the arrangement of the pantographs on two respective levels makes it possible to limit the overall dimensions of the telescopic cover in its fully retracted position. That is because in the direction D, the two pantographs constituting the unit by which the box-shaped members are moved, occupy the space defined by the dimensions of only one of the two pantographs.

The invention described is susceptible of industrial application and may be modified and adapted in several ways without thereby departing from the scope of the inventive concept, as defined by the claims.

## Claims

1. A telescopic protective cover, comprising a plurality of box-shaped members (2) slidable inside one another and at least one pantograph (10) or articulated link connection constrained to a group of box-shaped members (2) arranged in succession; the pantograph (10) comprising a plurality of basic cross joints (11) which are adjacent to each other and interconnected in succession in the direction (D) of movement of the telescopic cover (1); each cross joint (11) comprising two arms (12) hinged centrally to one another through the agency of a central pin (13); each arm (12) having, on opposite sides of the central pin (13), two longitudinal ends (14) which are hinged to respective peripheral pins (15); the peripheral pins (15) of the pantograph (10) being aligned in pairs in a direction transversal to the direction (D) of movement of the telescopic cover (1); the telescopic cover (1) being **characterized in that** it comprises a pair of pantographs (10i; 10s) which are offset from each other in the direction (D) of movement of the telescopic cover (1) and which are mounted in two different, respective planes; along the direction (D), the peripheral pins (15) of one pantograph (10i) being alternated, in their succession, with the peripheral pins (15) of the other pantograph (10s).

2. The telescopic protective cover according to claim 1, **characterized in that** for each of the two pantographs (10i; 10s) the arms (12) of the cross joints (11) of the pantographs (10i; 10s) are telescopic and **in that**, for each pair of peripheral pins (15) of the pantograph (10i; 10s) which are aligned in a direction transversal to the direction (D) of movement of the telescopic cover (1), both of the peripheral pins (15) are fixed to a single box-shaped member (2).

3. The telescopic protective cover according to claim 2, **characterized in that** the central pin (13) of each cross joint (11) is fixed to a box-shaped member (2) which is interposed between the adjacent box-shaped members (2) which the respective longitudinal ends (14) of the same cross joint (11) are hinged to in pairs.

4. The telescopic protective cover according to claim 3, **characterized in that** the central pins (13) are aligned in a row extending parallel to the direction (D) of movement of the telescopic cover (1).

5. The telescopic protective cover according to claim 4, **characterized in that** the peripheral pins (15) are aligned in two rows extending parallel to the direction (D) of movement of the telescopic cover (1) and at an equal distance from the row of central pins (13).

6. The telescopic protective cover according to any of the claims from 1 to 5, **characterized in that** each arm (12) comprises a tubular element (16) inside which two rods (17) which telescopically protrude from the two longitudinal ends of the selfsame tubular element (16) are slidably coupled; the tubular element (16) being provided, centrally between the rods, with a housing for accommodating the respective central pin (13); and each of the rods (17) being provided, at the end of it (14) outside the tubular element, with a housing for accommodating the respective peripheral pin (15).

7. The telescopic protective cover according to claim 6, **characterized in that** the tubular element (16) and the rods (17) have a flattened shape.

## Patentansprüche

1. Teleskopische Schutzabdeckung, umfassend eine Vielzahl an kastenförmigen Elementen (2), die ineinander verschiebbar sind, und mindestens einen Pantografen (10) oder eine Gelenkverbindung, verbunden mit einer Gruppe an kastenförmigen Elementen (2), die nacheinander angeordnet sind, wobei der Pantograf (10) eine Vielzahl an Basiskreuzgelenken (11) umfasst, die aneinander angrenzen und nacheinander in der Richtung (D) der Bewegung der teleskopischen Abdeckung (1) miteinander verbunden sind (1), wobei ein jedes Kreuzgelenk (11) zwei Arme (12) umfasst, die mittig mittels der Wirkung eines zentralen Stifts (13) gelenkig miteinander verbunden sind, wobei jeder Arm (12) an entgegengesetzten Seiten des zentralen Stifts (13) zwei Längsenden (14) aufweist, die gelenkig mit jeweiligen umfangsseitigen Stiften (15) verbunden sind, wobei die umfangsseitigen Stifte (15) des Pantografen (10) paarweise quer zur Richtung (D) der Bewegung der teleskopischen Abdeckung (1) ausgerichtet sind, wobei die teleskopische Abdeckung (1) **dadurch gekennzeichnet ist, dass** sie ein Paar Pantografen (10i; 10s) umfasst, die voneinander in die Richtung (D) der Bewegung der teleskopischen Abdeckung (1) versetzt sind und die in zwei unterschiedlichen jeweiligen Ebenen montiert sind, wobei die umfangsseitigen Stifte (15) eines Pantografen (10i) nacheinander mit den umfangsseitigen Stiften (15) des anderen Pantografen (10s) entlang der Richtung (D) abgewechselt werden.

2. Teleskopische Schutzabdeckung nach Anspruch 1, **dadurch gekennzeichnet, dass** die Arme (12) der Kreuzgelenke (11) der Pantografen (10i; 10s) bei einem jeden der zwei Pantografen (10i; 10s) teleskopisch sind, und dadurch, dass beide umfangsseitigen Stifte (15) bei jedem Paar umfangsseitiger Stifte (15) des Pantografen (10i; 10s), die quer zur Richtung (D) der Bewegung der teleskopischen Abdeckung (1) ausgerichtet sind, an einem einzelnen kastenförmigen Element (2) fixiert sind.

3. Teleskopische Schutzabdeckung nach Anspruch 2, **dadurch gekennzeichnet, dass** der zentrale Stift (13) eines jeden Kreuzgelenks (11) an einem kastenförmigen Element (2) fixiert ist, das zwischen den angrenzenden kastenförmigen Elementen (2) eingesetzt ist, an denen die jeweiligen Längsenden (14) desselben Kreuzgelenks (11) in Paaren gelenkig befestigt sind.

4. Teleskopische Schutzabdeckung nach Anspruch 3, **dadurch gekennzeichnet, dass** die zentralen Stifte (13) in einer Reihe ausgerichtet sind, die sich parallel zur Richtung (D) der Bewegung der teleskopischen Abdeckung (1) erstreckt.

5. Teleskopische Schutzabdeckung nach Anspruch 4, **dadurch gekennzeichnet, dass** die umfangsseitigen Stifte (15) in zwei Reihen ausgerichtet sind, die sich parallel zur Richtung (D) der Bewegung der teleskopischen Abdeckung (1) erstrecken und in einem gleichen Abstand von der Reihe der zentralen Stifte (13) .

6. Teleskopische Schutzabdeckung nach einem der Ansprüche 1 bis 5, **dadurch gekennzeichnet, dass** ein jeder Arm (12) ein Rohrelement (16) umfasst, in dem zwei Stangen (17), die teleskopisch aus den zwei Längsenden des Rohrelements (16) hervortreten, verschiebbar gekuppelt sind, wobei das Rohrelement (16) mittig zwischen den Stangen mit einem Gehäuse versehen ist, um den jeweiligen zentralen Stift (13) aufzunehmen, und eine jede der Stangen (17) an deren Ende (14) außerhalb des Rohrelements mit einem Gehäuse versehen ist, um den jeweiligen umfangsseitigen Stift (15) aufzunehmen.

7. Teleskopische Schutzabdeckung nach Anspruch 6, **dadurch gekennzeichnet, dass** das Rohrelement (16) und die Stangen (17) eine abgeflachte Form aufweisen.

## Revendications

1. Capot de protection télescopique, comprenant une pluralité d'éléments en forme de caisson (2) pouvant coulisser les uns dans les autres et au moins un pantographe (10) ou jonction articulée assujettie à un groupe d'éléments en forme de caisson (2) disposés en séquence ; le pantographe (10) comprenant une pluralité de croisillons élémentaires (11) adjacents et interconnectés en séquence dans la direction (D) de mouvement du capot télescopique (1) ; chaque croisillon (11) comprenant deux bras (12) montés pivotants centralement l'un sur l'autre par l'intermédiaire d'un pivot central (13) ; chaque bras (12) ayant, sur des côtés opposés au pivot central (13), deux extrémités longitudinales (14) qui sont montées pivotantes sur des pivots périphériques (15) respectifs ; les pivots périphériques (15) du pantographe (10) étant alignés par paires dans une direction transversale à la direction (D) de mouvement du capot télescopique (1) ; le capot télescopique (1) **se caractérisant en ce qu'**il comprend une paire de pantographes (10i ; 10s) qui sont décalés l'un par rapport à l'autre dans la direction (D) de mouvement du capot télescopique (1) et qui sont montés sur deux différents plans respectifs ; le long de la direction (D), les pivots périphériques (15) d'un pantographe (10i) alternant, dans leur séquence, avec les pivots périphériques (15) de l'autre pantographe (10s).

2. Capot de protection télescopique selon la revendication 1, **caractérisé en ce que**, pour chacun des deux pantographes (10i ; 10s) les bras (12) des croisillons (11) des pantographes (10i ; 10s) sont télescopiques et **en ce que**, pour chaque paire de pivots périphériques (15) du pantographe (10 i; 10s) qui sont alignés dans une direction transversale à la direction (D) de mouvement du capot télescopique (1), les deux pivots périphériques (15) sont fixés à un seul élément en forme de caisson (2).

3. Capot de protection télescopique selon la revendication 2, **caractérisé en ce que** le pivot central (13) de chaque croisillon (11) est fixé à un élément en forme de caisson (2) qui est interposé entre les éléments en forme de caisson (2) adjacents auxquels les extrémités longitudinales (14) respectives du même croisillon (11) sont montées pivotantes par paires.

4. Capot de protection télescopique selon la revendication 3, **caractérisé en ce que** les pivots centraux (13) sont alignés sur une rangée se développant en parallèle à la direction (D) de mouvement du capot télescopique (1).

5. Capot de protection télescopique selon la revendication 4, **caractérisé en ce que** les pivots périphériques (15) sont alignés sur deux rangées se développant en parallèle à la direction (D) de mouvement du capot télescopique (1) et à une distance égale de la rangée des pivots centraux (13).

6. Capot de protection télescopique selon l'une quelconque des revendications 1 à 5, **caractérisé en ce que** chaque bras (12) comprend un élément tubulaire (16) dans lequel deux tiges (17), qui dépassent télescopiquement des deux extrémités longitudinales dudit élément tubulaire (16), sont accouplées de façon coulissante ; l'élément tubulaire (16) présentant, centralement entre les tiges, un logement pour accueillir le pivot central (13) respectif ; et chaque tige (17) présentant, à son extrémité (14) externe de l'élément tubulaire, un logement pour accueillir le pivot périphérique (15) respectif.

7. Capot de protection télescopique selon la revendication 6, **caractérisé en ce que** l'élément tubulaire (16) et les tiges (17) ont une forme aplatie.
